# EUROPÄISCHE PATENTANMELDUNG

(11) **EP 1 325 878 A1**
(43) Veröffentlichungstag der Anmeldung: **09.07.2003**
(21) Anmeldenummer: 02014607.2
(22) Anmeldetag: 02.07.2002
(51) Int. Cl.: B65G 69/24, B64F 1/32, B66C 19/00

(54) **Flugzeugbeladevorrichtung**

(30) Priorität: 04.01.2002 DE 10200421
(71) Anmelder: Trepel Airport Equipment GmbH, 97941 Tauberbischofsheim (DE)
(72) Erfinder: Reymann, Gottfried, 65191 Wiesbaden (DE)
(74) Vertreter: Quermann, Helmut, Dipl.-Ing.

(57) **Zusammenfassung**

Die Erfindung betrifft eine fahrbare Flugzeugbeladevorrichtung (1), mit einem Rahmen (2), einer relativ zum Rahmen vertikal verfahrbaren Hauptplattform (12) und einer relativ zum Rahmen vertikal verfahrbaren, an das Flugzeug andockbaren Frontplattform (16), sowie Kraftmitteln zum unabhängigen Heben und Senken der Plattformen, wobei die obere Fläche der jeweiligen Plattform der Aufnahme des zu be- bzw. entladenden Gutes dient.

Erfindungsgemäß ist mindestens eine relativ zum Rahmen vertikal verfahrbare, neben der Hauptplattform angeordnete Seiten plattform (32) vorgesehen, ferner Kraftmittel zum Heben und Senken der Seitenplattform unabhängig zur Hauptplattform, wobei die obere Fläche der Seitenplattform der Aufnahme des zu be- bzw. entladenden Gutes dient.

Mittels einer derartigen Vorrichtung ist es insbesondere möglich, während der Hub- bzw. Senkbewegung der Hauptplattform und dem Verladevorgang der Hauptplattform, das zu be- bzw. entladende Gut bereits auf der Seitenplattform vorzupositionieren. Im Vergleich zu herkömmlichen Vorrichtungen kann das Ladegut innerhalb deutlich kürzerer Zeit abgefertigt werden.

## Beschreibung

Die Erfindung betrifft eine fahrbare Flugzeugbeladevorrichtung mit einem Rahmen, einer relativ zum Rahmen vertikal verfahrbaren Hauptplattform und einer relativ zum Rahmen vertikal verfahrbaren, an das Flugzeug andockbaren Frontplattform, sowie Kraftmitteln zum unabhängigen Heben und Senken der Plattform, wobei die obere Fläche der jeweiligen Plattform der Aufnahme des zu be- bzw. entladenden Gutes dient.

Eine derartige verfahrbare Flugzeugladevorrichtung ist beispielsweise aus der DE 37 30 415 C2 bekannt. Bei dieser wird sowohl die Frontplattform als auch die Hauptplattform von Scheren getragen. Jeder Plattform ist ein Scherenpaar zugeordnet. Für das Scherenpaar der Vorderplattform ist zusätzlich ein Aushubzylinder vorgesehen, der an dem, die Scheren des Scherenpaares verbindenden Joch angreift. Die Hauptplattform wird mittels zweier Ketten angehoben, die im Bereich von Rollen umgelenkt werden, die mittels vertikal angeordneter Hydraulikzylinder heb- und senkbar sind.

Bei dieser Flugzeugbeladevorrichtung dient ausschließlich die Hauptplattform und die Frontplattform der Aufnahme des zu be- bzw. entladenden Gutes. Güter, die auf die Hauptplattform übernommen werden, müssen, bevor sie über die Frontplattform dem Flugzeug zugeleitet werden, auf der Hauptplattform positioniert werden. Dies benötigt Zeit und vermindert somit die Ladekapazität der Flugzeugbeladevorrichtung. - Bei der Flugzeugbeladevorrichtung haben die Scheren für die jeweilige Plattform sowohl tragende Funktion als auch Führungsfunktion. Das Konstruktionsprinzip der Scheren bedingt eine maximale Förderhöhe der Plattformen, die für besonders große Flugzeuge mit entsprechend hoch liegender Beladeebene nicht ausreicht. Bei solchen Flugzeugen befindet sich das Beladeniveau durchaus acht Meter oder mehr oberhalb der Fahrfläche des Flugzeuges.

Ähnliche Flugzeugbeladevorrichtungen sind aus der DE 21 30 968 A und US 39 932 077 bekannt. Bei diesen ist in die Hauptplattform ein Fördersystem, das aus einer Vielzahl von Förderrollen gebildet ist, integriert.

Aus der Praxis ist es bekannt, größere Förderhöhen durchaus mittels Scheren zu verwirklichen, ohne die Baulänge des Fahrzeuges vergrößern zu müssen. Hierbei kommen zwei oder mehrere übereinander angeordnete Scherensysteme zur Anwendung. Eine solche Gestaltung einer Flugzeugbeladevorrichtung ist baulich sehr aufwendig und kostspielig, andererseits technisch problematisch, da große Lasten gehoben und gesenkt werden müssen. Die Beladehöhe unten muss geringstmöglich (520 mm) systembedingt ausgeführt sein, welches ein weiteres großes Problem darstellt.

Es ist ferner bekannt, Container mittels eines Portalkrans zu verladen. Die balkenartige Tragevorrichtung zur hängenden Aufnahme eines Containers ist in vertikal orientierten Streben des Portalrahmens heb- und senkbar, so dass, aufgrund der Verfahrbarkeit des Portalrahmens auf der Fahrfläche eines Containerterminals, Container beliebig verfahren, gestapelt und entstapelt werden können. Mit einem derartigen, verfahrbaren Portalkran können Stapelhöhen bis zu vier Containern erreicht werden. Bei einem solchen Stapelkran befindet sich in aller Regel die Fahrerkabine im oberen Bereich des Portals. Solche Konstruktionen haben keine Plattform mit Fördereinrichtung.

Aufgabe der Erfindung ist es, eine fahrbare Flugzeugbeladevorrichtung der eingangs genannten Art so weiterzubilden, dass im Vergleich zu herkömmlichen Flugzeugbeladevorrichtungen das Ladegut innerhalb deutlich kürzerer Zeit abgefertigt werden kann. Gemäß einer besonderen Weiterbildung der Erfindung sollen mit der Flugzeugbeladevorrichtung Flugzeuge mit besonders großen Ladehöhen be- und entladen werden können.

Gelöst wird die Aufgabe bei einer fahrbaren Flugzeugbeladevorrichtung der eingangs genannten Art dadurch, dass mindestens eine, relativ zum Rahmen vertikal verfahrbare, neben der Hauptplattform angeordnete Seitenplattform vorgesehen ist, ferner Kraftmittel zum Heben und Senken der Seitenplattform unabhängig zur Hauptplattform vorgesehen sind, wobei die obere Fläche der Seitenplattform der Aufnahme des zu be- bzw. entladenden Gutes dient.

Der besondere Vorteil der Erfindung ist darin zu sehen, dass diese mindestens eine Seitenplattform es ermöglicht, während des Hub- bzw. Senkvorganges und des Verladevorganges der Hauptplattform Container bzw. Paletten bereits auf der Seitenplattform, die die Funktion einer Zusatzplattform aufweist, vorzupositionieren, um sie dann an die Hauptplattform abzugeben. Durch diese Vorpositionierung ist eine erhebliche Zeitersparnis möglich. Die vorpositionierten Container/Paletten brauchen nur noch in einer einfachen Bewegung auf die Hauptplattform übergeschoben werden und sind dann unmittelbar bereit, verladen zu werden. Weitere Zeit beim Verladen lässt sich einsparen, wenn nicht nur eine Seitenplattform vorgesehen ist, sondern auf beiden Seiten der Hauptplattform eine solche. Mittels der Seitenplattform kann das Gut auch gepuffert werden.

Bei der erfindungsgemäß gestalteten Flugzeugbeladevorrichtung stehen, abgesehen von der Frontplattform, somit zwei oder gar drei Plattformen zur Verfügung, die dem Heben und Senken des zu be- bzw. entladenden Gutes dienen, wobei die Hauptplattform die Schlüsselfunktion aufweist, indem über sie das Gut zur Frontplattform beschickt oder von dieser übernommen wird und von der Seitenplattform bzw. den Seitenplattformen das Gut zur Hauptplattform übergeben bzw. von dieser übernommen wird.

Vorzugsweise sind somit die Hubniveaus von der Hauptplattform und der mindestens einen Seitenplattform identisch. Das unterste Niveau der Hauptplattform stimmt damit, mit dem untersten Niveau der Seitenplattform überein, ferner stimmt das maximal angehobene Niveau der Hauptplattform mit dem maximal angehobenen Niveau der Seitenplattform, ferner das Zwischenniveau der Hauptplattform mit dem Zwischenniveau der Seitenplattform überein.

Als besonders vorteilhaft wird es angesehen, wenn die jeweilige Seitenplattform auf ihrer, der Hauptplattform zugewandten Seite kippbar im Rahmen gelagert ist. In der gekippten Stellung der Seitenplattform liegt diese weitestgehend am Rahmen an, so dass die fahrbare Flugzeugbeladevorrichtung nur unwesentlich breiter ist als herkömmlich fahrbare Flugzeugbeladevorrichtungen.

Gemäß einer besonderen Ausführungsform der Erfindung ist vorgesehen, dass der Rahmen als Portalrahmen ausgebildet ist und die Hauptplattform, die Frontplattform und die mindestens eine Seitenplattform in vertikalen Streben des Portalrahmens gelagert sind.

Diese Weiterbildung löst sich von dem Funktionsprinzip der Verwendung von Scherenkonstruktionen bei fahrbaren Flugzeugbeladevorrichtungen. Statt dessen sind die Hauptplattform, die Frontplattform und die mindestens eine Seitenplattform in den vertikalen Streben des Portalrahmens der Flugzeugbeladevorrichtung gelagert. Entsprechend dem durch den Flugzeugtyp vorgegebenen Belade- bzw. Entladeniveau des Flugzeuges ist der Portalrahmen in seiner Höhe zu dimensionieren. Der Portalrahmen stellt das steife Bauelement dar, in dem die Plattformen definiert geführt werden können. Er dient ferner der Aufnahme des Fahrwerkes und der Aggregate der Flugzeugbeladeeinrichtung, insbesondere derjenigen zum Heben und Senken der Plattformen, der Aggregate zum Betätigen eines zumindest in die Hauptplattform integrierten Fördersystems, des Fahrwerks, eventueller Stützzylinder zum Abstützen des Portalrahmens gegenüber dem Boden beim Be- und Entladen usw..

Die Flugzeugbeladevorrichtung ist insbesondere selbstfahrend, kann aber durchaus ohne Antrieb zum Fahren ausgestattet sein, so dass sie geschleppt wird. Das Verfahren der Beladevorrichtung kann mit oder ohne Last erfolgen, wobei sich hierbei die Hauptplattform bevorzugt in einer relativ unteren Stellung befindet. In aller Regel werden in den Ecken des Portalrahmens Räder vorgesehen sein, somit zumindest vier Räder bzw. vier Radpaare. Es sollten zwei oder mehrere Räder bzw. Radpaare antreibbar sein. Vorzugsweise handelt es sich um einen Allradantrieb. Sind alle Räder bzw. Radpaare lenkbar, kann die Flugzeugbeladevorrichtung beliebig verfahren werden, insbesondere längs, quer, im Kreis oder diagonal.

Damit der Be- bzw. Entladevorgang optimal vonstatten gehen kann, sollten die Hauptplattform, die Frontplattform und die mindestens eine Seitenplattform separat heb- und senkbar sein. Vorzugsweise sind zusätzliche Mittel zum Erzeugen einer Querneigung der Frontplattform vorgesehen. Hierdurch kann diese optimal bezüglich der Außenhaut des Flugzeuges ausgerichtet werden. Als Hubantrieb für die Plattformen kommt insbesondere ein elektrischer Antrieb oder die Kombination eines elektro-hydraulischen Antriebes in Frage. Es ist auch denkbar als Hubelemente Seil- oder Kettenzüge zu verwenden.

Um die Frontplattform besonders einfach an das Flugzeug andocken zu können, ist sie vorzugsweise mit einem teleskopierbaren Ausschub versehen bzw. abklappbar ausgeführt. Die Frontplattform, insbesondere der Ausschub besteht aus einzelnen Segmenten, so dass, bei in Außerwirkstellung befindlichen äußeren Segmenten, auch Flugzeuge be- bzw. entladen werden können, deren Tür- bzw. Ladelukenbreite geringer ist.

Die Steuerung und Bedienung der Flugzeugbeladevorrichtung erfolgt vorzugsweise von oben. Es ist insbesondere eine in Art eines Lifts heb- bzw. senkbare Fahrerkabine im Bereich einer Strebe des Portalrahmens vorgesehen. Die Fahrerkabine bewegt sich zweckmäßig mit der Vorderplattform, lässt sich aber vollständig absenken, so dass keine Leiter oder dergleichen zum Besteigen der Fahrerkabine nötig ist.

Gemäß einer besonderen Ausführungsform der Erfindung ist vorgesehen, dass der obere Bereich des Portalrahmens, insbesondere dessen oberes Rahmenprofil und/oder eine am Portalrahmen unterhalb der Frontplattform angeordnete Einrichtung der Aufnahme des Antriebes für die Aggregate der Flugzeugbeladeeinrichtung dient. Der unter dem oberen Rahmenprofil befindliche Bereich des Portalrahmens ermöglicht damit die ungehinderte Verfahrbarkeit der Plattformen, insbesondere der Hauptplattform. In diesem Zusammenhang wird es als vorteilhaft angesehen, wenn die Frontplattform außerhalb der vertikalen Projektion des Portalrahmens angeordnet ist.

Um das Gut einfach und schnell im Bereich der Plattformen fördern zu können, sollten die Plattformen mit Fördereinrichtungen versehen sein. Weiter sollten Mittel zum vereinfachten seitlichen Verladen vorgesehen sein. So weist die Hauptplattform beispielsweise in ihrem hinteren Bereich eine Seitenladungsrolle auf und/oder der Portalrahmen seitlich eine sehr tief, somit geringfügig über dem Fahrboden liegende Seitenladungsrolle. Bei abgesenkter Hauptplattform kann über diese Seitenladungsrolle unkompliziert in der Mitte der Flugzeugbeladevorrichtung die Beladung der Hauptplattform erfolgen. Zusätzlich sollte, insbesondere bei einer Lkw-Beladung, eine Heckverladung möglich sein, somit eine Beladung der Hauptplattform über deren hinteres Ende. In die jeweilige Plattform ist vorzugsweise ein Fördersystem zum Fördern des Gutes in Längsund Querrichtung sowie zum Drehen des Gutes integriert.

Damit die Flugzeugbeladevorrichtung beim Entladen nicht schaukelt oder eine schiefe Position einnimmt, sollten, im Bereich der Räder, auf den Boden ausfahrbare Stabilisierungsstützen vorgesehen sein. Um die, auf dem Flughafenvorfeld gegebenenfalls vorhandenen, minimalen Steigungen mit horizontal orientierten Plattformen befahren zu können, sollten die einzelnen Räder geringfügig hebbar bzw. senkbar sein. Die Räder sind insbesondere lenkbar, womit sie alle Fahrbewegungen der Flugzeugbeladevorrichtung zulassen, somit insbesondere Bewegungen geradeaus, quer, kreisförmig.

Zweckmäßig kann bei der Flugzeugbeladevorrichtung während des Fahrens die Last gehoben bzw. gesenkt werden.

Insbesondere bei sehr großen Flugzeugen kann die Flugzeugbeladevorrichtung zusätzlich mit einem Personenaufzug versehen sein.

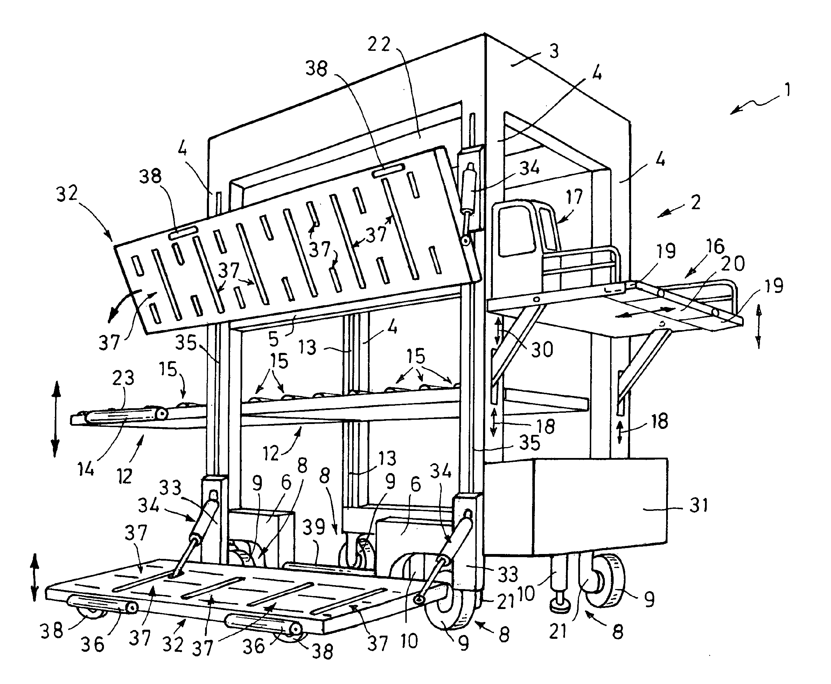

Weitere Merkmale der Erfindung sind in den Unteransprüchen, der Beschreibung der einzigen Figur und der Figur selbst dargestellt, wobei bemerkt wird, dass alle Einzelmerkmale und alle Kombination von Einzelmerkmalen weitere erfinderische Ausgestaltungen darstellen.

In der Figur ist die Erfindung anhand eines Ausführungsbeispiels erläutert, ohne hierauf beschränkt zu sein. Diese Figur zeigt die verfahrbare Flugzeugbeladevorrichtung in einer räumlichen Ansicht.

Die verfahrbare Flugzeugbeladevorrichtung 1 besitzt einen Portalrahmen 2. Dieser weist in seinem oberen Bereich ein rechteckiges Rahmenprofil 3 auf. Von den Eckbereichen des Rahmenprofils 3 gehen vier vertikale Streben 4 bzw. Führungsmasten des Portalrahmens 2 ab. Das jeweilige seitliche Strebenpaar ist mittels einer, auf mittlerem Niveau verlaufenden horizontalen Strebe 5 verbunden. Unten ist das jeweilige seitliche Paar vertikaler Streben 4 verstrebt, und zwar durch zwei L-förmige, in Art eines Radkastens ausgebildete Rahmenteile 6, die eine axial drehbare Seitenladungsrolle 39 verbindet. In jeder Ecke des Portalrahmens 2 ist in der Verlängerung unterhalb der jeweiligen vertikalen Strebe 4, ein Fahrwerk 8 angeordnet, dem im Ausführungsbeispiel ein Rad 9 zugeordnet ist. Jedes Rad 9 ist lenkbar, antreibbar und in Knickbeinen gelagert, so dass die Möglichkeit besteht, das jeweilige Rad anzuheben oder zu senken. Benachbart des jeweiligen Rades 9 ist im zugeordneten Rahmenteil 6 eine Stabilisierungsstütze 10 gelagert, die auf dem Fahrboden senkbar und von diesem anhebbar ist. In einer der beiden vorderen vertikalen Streben 4 ist eine Fahrerkabine 17 in Art eines Liftes heb- und senkbar gelagert, wie es durch den in diesem Bereich verdeutlichten Pfeil 30 veranschaulicht ist.

Eine Hauptplattform 12, die in ihrer vertikalen Projektion rechteckig ausgebildet ist, weist eine Breite auf, die geringfügig geringer ist als der Breitenabstand der vertikalen Streben 4. Die Länge der Hauptplattform 12 ist deutlich größer als das horizontale Längenmaß des Portalrahmens 2, so dass die Hauptplattform 12 hinten aus dem Portalrahmen 2 herausragt, beispielsweise um etwa 1/3 ihrer Gesamtlänge. Die Hauptplattform 12 ist in Führungen 13 der vertikalen Streben 4 gelagert. Die Lagerung erfolgt nicht unmittelbar in den Führungen 13, sondern über Schlitten, so dass die Hauptplattform 12 mit ihrer oberen Fläche unter das Niveau der vertikalen Streben 4 bis auf das Niveau der Seitenladungsrolle des Portalrahmens 2 abgesenkt werden kann. Auch der hinten aus dem Portalrahmen 2 herausragende Bereich der Hauptplattform 12 ist zumindest auf einer Seite mit einer Seitenladungsrolle 14 versehen. Die zur Aufnahme des Gutes dienende obere Fläche 23 der Hauptplattform 12 ist mit einem Fördersystem 15 versehen, das beispielsweise eine Vielzahl antreibbarer rollenartiger Förderelemente aufweist. Vorne, unmittelbar an die Hauptplattform 12 anschließend, ist eine Frontplattform 16 im Portalrahmen 2 vertikal verfahrbar gelagert. Deren Breite ist größer als die der Hauptplattform, da sie außerhalb des Portalrahmens 2 angeordnet und in den Frontseiten der vorderen vertikalen Streben 4 gelagert ist. Neben der Frontplattform 16 ist die Fahrerkabine 17 angeordnet. Mittels Einzel-Verstellzylindern, verdeutlicht durch die Pfeile 18, kann die Frontplattform 16 angehoben und abgesenkt, sowie aus der Horizontalen geringfügig quer geneigt werden. Im vorderen Bereich weist die Frontplattform 16 seitlich äußere Klappsegmente 19 und einen dazwischen befindlichen teleskopierbaren, horizontal ein- und ausfahrbaren Plattformabschnitt 20 auf.

In dem Ausführungsbeispiel ist der Portalrahmen 2 auf einer Längsseite mit einer Seitenplattform 32 versehen. Die Länge dieser Seitenplattform 32 entspricht im Wesentlichen dem Abstand der dieser benachbarten beiden Streben 4. Die Seitenplattform 32 ist auf ihrer, dem Portalrahmen 2 zugewandten Seite schwenkbar in diesem gelagert, wobei in den beiden Streben 4 gelagerte, vertikal verfahrbare Führungsschlitten 33 unten die Seitenplattform 32 schwenkbar aufnehmen und oben Hubzylinder 34 schwenkbar aufnehmen, die in Abstand zur Schwenkachse der Seiten plattform 32 an dieser angreifen. Über nicht gezeigte Stellmittel lassen sich die beiden Führungsschlitten 32 in den beiden Streben 4 zugeordneten Führungsschienen 35 in Längserstreckung der zugeordneten Streben 4 verfahren.

Die fahrbare Flugzeugbeladevorrichtung 1 ist auf jeder der beiden Längsseiten mit einer Seitenplattform 32 versehen. In der gezeigten Figur ist nur eine Seitenplattform veranschaulicht, die auf der anderen Seite angeordnete Seitenplattform 32 ist identisch gelagert und identisch ausgebildet. Die veranschaulichte Seitenplattform 32 ist in ihrer angehobenen eingeklappten und in ihrer abgesenkten ausgefahrenen Stellung veranschaulicht. In ihrer abgesenkten ausgefahrenen Stellung befindet sich diese Seitenplattform 32 mit ihrem Ladenniveau auf dem Übernahmeniveau der axial drehbaren Seitenladungsrolle, die zwischen den seitlichen Rahmenteilen 6 angeordnet ist. Statt der Versteifung des Portalrahmens 2 mittels der horizontalen Strebe 5 kann die Versteifung unmittelbar durch die in den beiden seitlichen Streben 4 gelagerte Seitenplattform 32 herbeigeführt werden.

Nicht gezeigt ist der Antrieb für die diversen Aggregate der Flugzeugbeladevorrichtung 1, insbesondere zum Heben und Senken der Plattformen 12, 16 und 32, dem Ausfahren des teleskopierbaren Abschnittes 20 der Frontplattform 16, dem Betätigen des Fördersystems 15 und der Seitenladungsrollen, dem Antreiben der Räder 9 und der dazugehörigen Bremsen sowie eines Hubzylinders 21 für den jeweiligen Radsatz. Der Antrieb für diese Aggregate bzw. die Steuerung ist entweder in dem oberen Bereich 22 des Portalrahmens 2 angeordnet, der vom oberen, kastenartigen Rahmenprofil 3 umschlossen wird, oder aber, wie veranschaulicht, in einem mit den vorderen Streben 4 verbundenen Behältnis 31, das unterhalb der Frontplattform 16 positioniert ist.

Im Übrigen ist in der Figur die Flugzeugbeladevorrichtung 1 bei im Wesentlichen vollständig angehobener Frontplattform 16 und teilweise angehobener Hauptplattform 12, jeweils ohne auf den Plattformen befindliches Ladegut veranschaulicht.

Die maximal angehobene Position von Frontplattform 16 und Hauptplattform 13, auf Höhe der Strebe 5, entspricht derjenigen, die zur oberen Position der nach oben gekippten Seitenplattform 32 veranschaulicht ist. Die Seitenplattform 32 dient insbesondere dem Vorpositionieren und/oder Puffern des zu be- bzw. entladenden Gutes, insbesondere von bei Flugzeugen Verwendung findenden Containern bzw. Paletten.

Die Hauptplattform 12 kann durchaus auf dem Beladeniveau der Frontplattform 16 verbleiben und das Gut über die auf der einen Seite des Portalrahmens angeordnete Seitenplattform 32 oder aber, sofern die Flugzeugbeladevorrichtung 1 auch auf der anderen Seite mit einer Seitenplattform 32 versehen ist, zusätzlich über diese zu- oder abgefördert werden. Die jeweilige Seitenplattform 32 kann hierzu, ausgehend von ihrer angehobenen, ausgeklappten Stellung auf Bodenniveau abgesenkt werden, wie es für den zweiten Betriebszustand in der Figur veranschaulicht ist.

Auch die Seitenplattform 32 ist mit Einzugsrollen 36, Seiten- und Endrollen versehen, des Weiteren ist in die Seitenplattform 32 ein Fördersystem 37 integriert, mit dem das zu be- bzw. entladende Gut längs und quer verschoben sowie gedreht werden kann. Das auskragende Ende der Seitenplattform 32 nimmt Transport- und Stützräder 38 auf.

## Patentansprüche

1. Fahrbare Flugzeugbeladevorrichtung (1) mit einem Rahmen (2), einer relativ zum Rahmen (2) vertikal verfahrbaren Hauptplattform (12), einer relativ zum Rahmen (2) vertikal verfahrbaren, an das Flugzeug andockbaren Frontplattform (16) sowie Kraftmitteln zum unabhängigen Heben und Senken der Plattformen (12, 16), wobei die obere Fläche (23) der jeweiligen Plattformen (12, 16) der Aufnahme des zu be- bzw. entladenden Gutes dient, **gekennzeichnet durch** mindestens eine relativ zum Rahmen (2) vertikal verfahrbare, neben der Hauptplattform (12) angeordnete Seitenplattform (32), sowie Kraftmitteln zum Heben und Senken der Seitenplattform (32) unabhängig zur Hauptplattform (12), wobei die obere Fläche (23) der Seiten plattform (32) der Aufnahme des zu be- bzw. entladenden Gutes dient.

2. Vorrichtung nach Anspruch 1, **gekennzeichnet durch** zwei Seitenplattformen (32), wobei eine Seitenplattform (32) auf der einen Seite und die andere Seitenplattform auf der anderen Seiten der Hauptplattform (12) angeordnet ist.

3. Vorrichtung nach Anspruch 1 oder 2, **dadurch gekennzeichnet, dass** die Seitenplattform (32) auf ihrer, der Hauptplattform (12) zugewandten Seite, kippbar im Rahmen (2) gelagert ist, und insbesondere Kraftmittel (34) zum Kippen der Seitenplattform (32) beidseitig der Seitenplattform (32) an dieser und dem Rahmen (2) angreifen.

4. Vorrichtung nach einem der Ansprüche 1 bis 3, **dadurch gekennzeichnet, dass** der Rahmen (2) als Portalrahmen ausgebildet ist, und die Hauptplattform (12), die Frontplattform (16) und die mindestens eine Seitenplattform (32) in vertikalen Streben (4) des Portalrahmens (2) gelagert sind.

5. Vorrichtung nach Anspruch 4, **dadurch gekennzeichnet, dass** der Portalrahmen (2) in vertikaler Projektion im Wesentlichen rechteckigen Querschnitt aufweist und/oder der Portalrahmen (2) quaderförmig ausgebildet ist und/oder der obere Bereich des Portalrahmens (2) als rechteckiges Rahmenprofil (3) ausgebildet ist und/oder die Frontplattform (16) in vertikaler Projektion im Wesentlichen rechteckigen Querschnitt aufweist.

6. Vorrichtung nach Anspruch 4 oder 5, **dadurch gekennzeichnet, dass** der Portalrahmen (2) vier vertikale Eckstreben (4) aufweist, und die Hauptplattform (12) in den Eckstreben (4) gelagert ist.

7. Vorrichtung nach einem der Ansprüche 4 bis 6, **dadurch gekennzeichnet, dass** die Hauptplattform (12) innerhalb der lichten Breite des Portalrahmens (2) angeordnet ist und mit ihrem hinteren Bereich aus der vertikalen Projektion des Portalrahmens (2) ragt.

8. Vorrichtung nach einem der Ansprüche 4 bis 7, **dadurch gekennzeichnet, dass** die jeweiligen beiden seitlichen vertikalen Streben (4) mittels mindestens einer Strebe (5, 6, 7), insbesondere einer horizontalen Strebe (5) und/oder mittels der in dieser gelagerten Seitenplattform (32) versteift sind.

9. Vorrichtung nach einem der Ansprüche 4 bis 8, **dadurch gekennzeichnet, dass** eine horizontale Mittelstrebe (5) etwa auf halber Höhe des Portalrahmens (2) und/oder eine untere Strebe (6, 7) im Bereich des Fahrwerks (8) angeordnet sind.

10. Vorrichtung nach Anspruch 9, **dadurch gekennzeichnet, dass** die untere Strebe (6, 7) im Bereich zwischen einem vorderen und hinteren Rad (9) auf der jeweiligen Seite des Portalrahmens (2) einen auf tieferem Niveau liegenden Strebenbereich aufweist.

11. Vorrichtung nach einem der Ansprüche 4 bis 10, **dadurch gekennzeichnet, dass** der Portalrahmen (2) auf mindestens einer Seite eine Einrichtung zum seitlichen Beladen der Hauptplattform (12), insbesondere eine horizontale Seitenladungsrolle (7) aufweist.

12. Vorrichtung nach Anspruch 11, **dadurch gekennzeichnet, dass** die Seitenladungsrolle (7) Bestandteil der unteren Strebe (6, 7) ist, insbesondere durch den auf tieferem Niveau liegenden Strebenbereich (7) der unteren Strebe (6, 7) gebildet ist.

13. Vorrichtung nach einem der Ansprüche 4 bis 12, **dadurch gekennzeichnet, dass** die Frontplattform (16) außerhalb des Portalrahmens (2) angeordnet ist, und insbesondere in den beiden vorderen vertikalen Streben (4) des Portalrahmens (2) gelagert ist.

14. Vorrichtung nach einem der Ansprüche 1 bis 13, **dadurch gekennzeichnet, dass** eine Fahrerkabine (17) bewegungsschlüssig mit der Frontplattform (16) gekoppelt ist.

15. Vorrichtung nach einem der Ansprüche 1 bis 14, **dadurch gekennzeichnet, dass** eine Fahrerkabine (17) im Rahmen (2), insbesondere in einer vertikalen Strebe (4) des Rahmens (2) heb- und senkbar gelagert ist, sowie Mittel zum Heben und Senken der Fahrerkabinen (17) vorgesehen sind.

16. Vorrichtung nach einem der Ansprüche 1 bis 15, **dadurch gekennzeichnet, dass** Mittel (18) zum Neigen der Frontplattform (16) in Querrichtung vorgesehen sind.

17. Vorrichtung nach einem der Ansprüche 1 bis 16, **dadurch gekennzeichnet, dass** der Frontbereich der Frontplattform (16) mit Segmenten (9) versehen ist, insbesondere mit einzeln ein- und ausfahrbaren bzw. klappbaren Segmenten (19, 20).

18. Vorrichtung nach einem der Ansprüche 4 bis 17, **dadurch gekennzeichnet, dass** der hintere, aus der vertikalen Projektion des Portalrahmens (2) ragende Bereich der Hauptplattform (12) mit einer Einrichtung zum seitlichen Beladen der Hauptplattform (12), insbesondere einer Seitenladungsrolle (14) versehen ist.

19. Vorrichtung nach einem der Ansprüche 1 bis 18, **dadurch gekennzeichnet, dass** in die Hauptplattform (12) und/oder die Frontplattform (16) und/oder die mindestens eine Seitenplattform (32) in ein Fördersystem (15, 37) integriert ist.

20. Vorrichtung nach einem der Ansprüche 4 bis 19, **dadurch gekennzeichnet, dass** der obere Bereich des Portalrahmens (2), insbesondere dessen oberes Rahmenprofil (3), und/oder eine am Portalrahmen (2) unterhalb der Frontplattform (16) angeordnete Einrichtung (31) der Aufnahme des Antriebes für die Aggregate der Flugzeugbeladevorrichtung (1) dient.

21. Vorrichtung nach einem der Ansprüche 1 bis 20, **dadurch gekennzeichnet, dass** die Räder (9) des Fahrwerks (8) in den Eckbereichen des Portalrahmens (2) angeordnet sind und/oder die Räder (9) heb- und senkbar sind und/oder die Räder (9) lenkbar sind.

22. Vorrichtung nach Anspruch 21, **dadurch gekennzeichnet, dass** benachbart den Rädern (9) des Fahrwerks (8) Stützzylinder (10) zum Abstützen des Portalrahmens (2) auf dem Boden beim Ausfahren der Stützzylinder (10) vorgesehen sind.
